# FASCICULE DE BREVET EUROPEEN

(11) **EP 0 601 635 B1**
(45) Date de publication et mention de la délivrance du brevet: **10.09.1997**
(21) Numéro de dépôt: 93203353.3
(22) Date de dépôt: 01.12.1993
(51) Int. Cl.: C08L 23/02, C08L 101/00, C08F 291/00, C08F 255/00

(54) **Composition thermoplastique, procédé pour sa préparation, et utilisation**
Thermoplastische Zusammensetzung, Verfahren zur deren Herstellung und deren Anwendung
Thermoplastic composition, process for its preparation and its use

(30) Priorité: 07.12.1992 BE 9201073
(43) Date de publication de la demande: 15.06.1994
(73) Titulaire: SOLVAY POLYOLEFINS EUROPE - BELGIUM (Société Anonyme), 1050 Bruxelles (BE)
(72) Inventeur: Gauthy, Fernand, B-1780 Wemmel (BE); Vandevijver, Eric, B-1200 Bruxelles (BE); Momtaz, Ardechir, B-1180 Bruxelles (BE)
(74) Mandataire: Troch, Geneviève

(56) Documents cités:
- EP-A- 0 024 120
- EP-A- 0 043 022
- EP-A- 0 210 307
- EP-A- 0 317 359
- EP-A- 0 440 922
- US-A- 4 739 011

## Description

La présente invention concerne une composition thermoplastique comprenant au moins une polyoléfine et un polymère thermoplastique dont la compatibilisation est améliorée. La présente invention concerne également un procédé pour obtenir une telle composition ainsi que son utilisation pour le façonnage d'objets par les procédés d'extrusion, de calandrage, d'injection et de thermoformage.

Les polyoléfines sont des polymères connus pour leurs bonnes propriétés mécaniques, chimiques et électriques. Leur coût relativement peu élevé en fait un matériau de choix pour un grand nombre d'applications telles que par exemple la formation d'objets façonnés.

Certaines applications requérant des propriétés mécaniques et rhéologiques particulières que ne possèdent pas les polyoléfines prises individuellement, il peut s'avérer intéressant de les mélanger entre elles ou avec d'autres polymères thermoplastiques. Malheureusement les polymères étant généralement non miscibles, on obtient par simple mélange des compositions hétérophasées dans lesquelles la dispersion de la phase minoritaire n'est pas suffisamment fine, homogène et stable. On constate également que l'adhésion entre les phases de ces mélanges n'est pas toujours suffisante pour assurer à l'ensemble de bonnes propriétés mécaniques. Les performances de ces compositions sont dès lors médiocres et leur morphologie susceptible d'être modifiée lors de tout traitement thermique ultérieur. Pour pallier cet inconvénient, il y a lieu de compatibiliser les polymères c'est-à-dire diminuer la tension interfaciale entre les diverses phases polymères et augmenter leur adhésion. Pour ce faire il est possible d'introduire dans le mélange des agents de compatibilisation, synthétisés dans une étape distincte et qui sont constitués de copolymères contenant des blocs respectivement compatibles avec l'un et l'autre des polymères. De tels composés sont difficiles à obtenir et ne sont réellement efficaces qu'à des concentrations relativement élevées. Il en résulte qu'une telle compatibilisation est difficile à réaliser de manière économique et donne généralement lieu à des mélanges dont certaines performances sont inférieures à celles de leurs polymères constitutifs [Society of Plastics Engineers - VII Internat. Conf. - 1991, pages 575-592 (SHELL)].

Il est également possible d'augmenter la compatibilité entre les polymères par couplage de leurs chaînes macromoléculaires. De tels couplages peuvent être obtenus par introduction dans le mélange de composés susceptibles de générer des radicaux libres comme décrit par exemple dans Advances Polymer Technology, 10 (3), 163 (1990). Selon ce document on n'obtient des mélanges satisfaisants qu'à la condition d'utiliser des polymères de viscosités voisines. En outre dans un tel procédé, on observe en plus des réactions souhaitées de couplage entre les chaînes macromoléculaires de chacun des polymères, des réactions parasites de dépolymérisation ou de couplage préférentiel des chaînes appartenant à un même polymère. Ces réactions parasites conduisent à des modifications parfois importantes des propriétés des polymères initiaux et les compositions ainsi obtenues ne présentent pas les performances souhaitées.

On a maintenant trouvé des compositions à base de polyoléfine ne présentant pas les inconvénients de celles décrites précédemment.

La présente invention concerne à cet effet une composition thermoplastique comprenant au moins :
- une polyoléfine (A), choisie parmi les homo- et copolymères semi-cristallins du propylène,
- un polymère thermoplastique (B) choisi parmi les homo- et copolymères semi-critallins des alpha-oléfines contenant de 2 à 20 atomes de carbone de composition chimique différente de celle de la polyoléfine (A), et
- au moins un composé (C) choisi parmi les composés dérivés d'au moins un composé fonctionnel (D) comprenant au moins deux doubles liaisons carbone-carbone conjuguées et les composés dérivés d'au moins deux composés fonctionnels (D) choisis respectivement parmi les composés électrodonneur et électroaccepteur.

Par polyoléfine, on entend essentiellement les homopolymères et copolymères des alpha-oléfines contenant de 2 à 20 atomes de carbone telles que, par exemple, l'éthylène, le propylène, le 1-butène, le 1-pentène, le 1-hexène, les méthyl-1-butènes, les méthyl-1-pentènes, le 1-octène et le 1-décène. Dans le cadre de la présente invention, sont également considérés comme polyoléfines les copolymères des alpha-oléfines décrites ci-avant avec d'autres monomères insaturés tels que les acides organiques insaturés et leurs dérivés, les esters vinyliques, les composés vinyliques aromatiques, les vinylsilanes ainsi que les dioléfines aliphatiques et monocycliques non conjuguées, les dioléfines alicycliques ayant un pont endocyclique et les dioléfines aliphatiques conjuguées. A titre d'exemples de ces monomères insaturés on peut citer l'acide acrylique, l'acide méthacrylique, l'acide maléique, le méthylméthacrylate, l'acrylate et le méthacrylate de glycidyle, l'anhydride maléique, l'acétate et le butyrate de vinyle, le styrène et le méthylstyrène, le vinyltriméthylméthoxysilane et le γ-méthacryloyloxypropyltriméthoxysilane ainsi que l'hexadiène-1,4, le 4-vinylcyclohexène, le dicyclopentadiène, le methylène- et l'éthylidènenorbornène, le butadiène et l'isoprène. Les polyoléfines utilisables selon l'invention appartiennent à l'ensemble des polymères partiellement ou semi-cristallins tels que définis par exemple dans "Plastics Engineering" 2nd edition, R.J. CRAWFORD, PERGAMON PRESS (1987), pages 3 et 4 et appelés ci-après plus simplement polymères semi-cristallins.

La polyoléfine (A) est choisie parmi les homo et copolymères semi-cristallins du propylène. De préférence, les copolymères du propylène sont choisis parmi les copolymères du propylène avec une ou plusieurs alpha-oléfines telles que décrites ci-avant. Les polyoléfines (A) préférées sont les homopolymères et copolymères du propylène et de l'éthylène. Dans le cas des copolymères, ceux-ci peuvent comprendre en outre d'autres comonomères alpha-oléfiniques tels que par exemple l'hexène ou le 1-butène.

Les compositions selon la présente invention comprennent également un polymère thermoplastique (B) choisi parmi les homopolymères et copolymères des alpha-oléfines contenant de 2 à 20 atomes de carbone de composition chimique différente de celle de la polyoléfine (A).

Par polyoléfines de compositions chimiques différentes, on entend aussi bien des polyoléfines dont les chaînes polymères comprennent une ou plusieurs unités monomères différentes que des polyoléfines dérivées des mêmes unités monomères mais dans lesquelles les quantités respectives de ces unités monomères et/ou leur répartition sont différentes.

Les différents polymères thermoplastiques décrits ci-avant, leurs propriétés ainsi que les différents procédés pouvant être utilisés pour leur obtention sont bien connus de l'homme du métier et font partie de l'état de la technique.

De préférence la polyoléfine (A) et le polymère thermoplastique (B) constituent un mélange biphasique. On obtient de bons résultats lorsque l'unité monomère prépondérante en poids de la polyoléfine (A) est différente de celle du polymère thermoplastique (B).

De préférence le polymère thermoplastique (B) est choisi parmi les homo- et copolymères semi-cristallins de l'éthylène. De préférence les compositions selon l'invention ne contiennent qu'un polymère du propylène et qu'un polymère de l'éthylène.

Les compositions selon la présente invention comprennent outre la polyoléfine (A) et le polymère thermoplastique (B), au moins un composé (C) choisi parmi les composés dérivés d'au moins un composé fonctionnel (D) comprenant au moins deux doubles liaisons carbone-carbone conjuguées et les composés dérivés d'au moins deux composés fonctionnels (D) choisis respectivement parmi les composés électrodonneur et électroaccepteur.

Dans le cadre de la présente invention, on distingue deux types de compositions selon la nature du composé (C).

Les premières comprennent au moins un composé (C) dérivé d'au moins un composé fonctionnel (D) comprenant au moins deux doubles liaisons carbone-carbone conjuguées. A titre de composés fonctionnels (D) comprenant au moins deux doubles liaisons carbone-carbone conjugées on peut citer les oléfines, les polymères diéniques et en particulier les polymères diéniques liquides. Des exemples concrets d'oléfines sont les oléfines aromatiques telles que le styrène, l'α-méthylstyrène, le 1,1 diphényléthylène, le stilbène, le phénylacétylène, la vinylpyridine et le vinylnaphtalène, les di- et tri-oléfines aromatiques telles que le divinylbenzène et les dioléfines aliphatiques conjuguées telles que le butadiène ou l'isoprène. Dans le cadre de la présente invention, on entend également par oléfines les phénylvinyléthers.

Des composés fonctionnels (D) donnant de bons résultats sont l'isoprène, le butadiène, le styrène, la vinylpyridine et le divinylbenzène. Le divinylbenzène et le styrène donnent de bons résultats. Le divinylbenzène donne des résultats particulièrement bons.

Les secondes comprennent au moins un composé (C) dérivé d'au moins deux composés fonctionnels (D) choisis respectivement parmi les composés électrodonneurs et électroaccepteurs.

A titre de composés électroaccepteurs, on utilise préférentiellement l'anhydride maléique, les alkylmaléates, les acrylates d'alkyle et les maléimides. Des composés électroaccepteurs particulièrement préférés sont l'anhydride maléique et les acrylates d'alkyle. A titre de composés électrodonneurs, on utilise de préférence le styrène, le divinylbenzène, le butadiène, l'isoprène, l'acétate de vinyle, les anhydrides acryliques et méthacryliques et le méthylméthacrylate. Des composés électro-donneurs tout particulièrement préférés sont le styrène et le divinylbenzène. On obtient de particulièrement bons résultats lorsque le composé (C) est un dérivé du styrène et de l'anhydride maléique. On obtient également de bons résultats lorsque le composé (C) est un dérivé du divinylbenzène et de l'anhydride maléique. Le composé (C) peut également avantageusement être un dérivé du divinylbenzène et d'un acrylate d'alkyle.

Dans les compositions selon la présente invention, les proportions des différents constituants (A), (B) et (C) dépendent de leur nature chimique exacte, de leurs propriétés physiques et chimiques et des performances souhaitées pour la composition. En général la quantité de composé (C) est inférieure ou égale à 60 % en poids par rapport au poids total de la composition. Le plus souvent, cette quantité est inférieure ou égale à 30 % en poids et de préférence inférieure ou égale à 15 % en poids. On obtient de particulièrement bons résultats lorsque la quantité de composé (C) est inférieure ou égale à 10 % en poids et plus particulièrement inférieure ou égale à 5 % en poids. La quantité minimale de composé (C) peut être très faible. On observe déjà un effet favorable lorsque cette quantité est supérieure ou égale à 0,005 % en poids, plus particulièrement supérieure ou égale à 0,01 % en poids par rapport au poids total de la composition. On obtient de bons résultats lorsque cette quantité est supérieure ou égale à 0,05 % en poids, de préférence supérieure ou égale à 0,5 % en poids, par rapport au poids total de la composition.

Les quantités respectives de la polyoléfine (A) et du polymère thermoplastique (B) sont généralement telles que leur rapport en poids est de 0,01 à 100, de préférence de 0,05 à 20 et plus particulièrement de 0,1 à 10. Lorsque les compositions selon l'invention contiennent un polymère du propylène à titre de polyoléfine (A) et un polymère de l'éthylène à titre de polymère thermoplastique (B), il peut s'avérer dans certains cas avantageux que le polypropylène soit le constituant majoritaire. Le rapport en poids de la polyoléfine (A) au polymère thermoplastique (B) est alors de 1 à 100, le plus souvent de 1 à 20.

Les compositions selon la présente invention peuvent contenir d'autres additifs conventionnels tels que par exemple des stabilisants, des lubrifiants, des agents antistatiques, des agents de nucléation, des fibres de verre ou toutes autres charges utilisées habituellement en association avec les différents constituants.

Les compositions selon la présente invention présentent les nombreux avantages décrits ci-après. Elles présentent en général peu et le plus souvent pas d'agglomérats infusibles lors de leur mise en oeuvre. Ces compositions présentent également une dispersion des phases polymères remarquablement fine et homogène. En outre, cette dispersion est également remarquablement stable c'est-à-dire qu'elle se conserve en fondu en l'absence de cisaillement ou de malaxage. Une telle caractéristique peut permettre de mettre en oeuvre les compositions selon la présente invention de nombreuses fois sans observer de dégradation importante des propriétés.

On remarque également que l'adhésion entre les phases polymères est remarquablement élevée ce qui confère aux compositions selon l'invention de bonnes propriétés mécaniques.

Un autre avantage des compositions selon la présente invention est que les polymères qui les constituent conservent une grande partie de leurs propriétés initiales. On n'observe par exemple pas de modification importante de leur viscosité ou de leur indice de fluidité. Les compositions selon la présente invention présentent par conséquent le plus souvent une combinaison optimale des propriétés de leurs polymères constitutifs, combinaison qui, comme on l'a vu ci-avant, se conserve lors de mises en oeuvre successives.

Un avantage supplémentaire des compositions selon la présente invention est qu'elles ne donnent pas lieu, lors de leur mise en oeuvre, à la formation d'agglomérats de viscosité plus élevée susceptibles d'altérer les propriétés des objets ainsi obtenus.

Ces divers avantages sont présents même lorsque les deux polymères (A) et (B) présentent des viscosités fort différentes.

Enfin on remarque en outre que, dans certains cas, principalement lorsque la polyoléfine (A) est un polymère du propylène et plus particulièrement lorsque le polymère thermoplastique (B) est un polymère de l'éthylène, les compositions selon la présente invention possèdent de manière inattendue des propriétés rhéologiques et viscoélastiques particulières. En particulier, ces compositions possèdent une tenue en fondu caractérisée par une viscosité élongationnelle élevée à bas gradient de vitesse. Dans certains cas également, les compositions selon l'invention présentent, à l'état fondu, une augmentation de la résistance à la déformation lors de l'allongement ou de l'extension. Un tel phénomène est généralement appelé "durcissement sous tension" ou encore "strain hardening".

Ces différents avantages rendent les compositions selon l'invention particulièrement intéressantes pour l'obtention par injection ou par extrusion d'objets façonnés. En particulier, les compositions selon la présente invention qui présentent les propriétés rhéologiques particulières décrites ci-avant sont particulièrement bien adaptées à la formation d'objets façonnés par extrusion ou injection soufflage, thermoformage ou enduction. Ces compositions conviennent également particulièrement bien pour la formation de mousses. De telles utilisations constituent dès lors un second aspect de la présente invention.

Les conditions dans lesquelles sont obtenues les compositions selon la présente invention constituent un troisième aspect de la présente invention.

Les compositions selon la présente invention sont obtenues dans un procédé impliquant le mélange en fondu d'au moins une polyoléfine (A) avec un polymère thermoplastique (B) en présence d'un ou plusieurs composés fonctionnels (D) tels que définis ci-avant. Ces compositions sont en outre généralement obtenues en l'absence de tout milieu dispersant ou solvant, c'est-à-dire en masse fondue.

Le plus souvent ce mélange en fondu est réalisé dans des conditions telles qu'il y ait réaction au moins partielle des molécules de composés (D) entre elles et/ou avec les polymères (A) et/ou (B) pour former le ou les dérivés (C).

De préférence le procédé d'obtention des compositions selon la présente invention ne comprend qu'une seule étape de mélange en fondu des polymères (A) et (B) en présence du(es) composé(s) (D).

Les conditions dans lesquelles est effectué ce mélange ne sont pas critiques pour autant qu'elles induisent la fusion au moins partielle des polymères (A) et (B). De préférence elles sont telles qu'il y a fusion complète des constituants (A), (B) et (D). La température à laquelle est réalisé le mélange en fondu n'est pas critique pour autant qu'il y ait mélange entre les divers constituants qui se trouvent à l'état fondu. Généralement cette étape de mélange en fondu est effectuée à une température supérieure à la température de fusion du constituant ayant la température de fusion la plus élevée.

De préférence la température à laquelle est effectuée ce mélange ne dépasse pas la température de décomposition des polymères (A) et (B). Généralement on travaille à une température ne dépassant pas 400°C, de préférence pas 300°C, et plus particulièrement pas 250°C. La température minimale à laquelle est effectué le mélange en fondu est fonction des températures de fusion des différents constituants. Généralement elle est supérieure ou égale à 100°C, de préférence supérieure ou égale à 130°C et plus particulièrement supérieure ou égale à 150°C.

La durée du mélange est choisie en tenant compte de la nature des constituants mis en oeuvre et de la température de mélange. Cette durée varie généralement de 5 secondes à 120 minutes, le plus souvent de 10 secondes à 30 minutes.

Les quantités respectives des constituants (A), (B) et (D) mises en oeuvre ne sont pas critiques. Le plus souvent on met en oeuvre
- de 1 à 100 parties en poids de polyoléfine (A),
- de 1 à 100 parties en poids de polymère thermoplastique (B) et
- pour 100 parties de l'ensemble de la polyoléfine (A) et du polymère thermoplastique (B), de 0,005 à 100 parties en poids de composé(s) fonctionnel(s) (D).

De préférence la quantité de composé fonctionnel (D) mis en oeuvre pour réaliser de tels mélanges est supérieure ou égale à 0,01 partie plus particulièrement supérieure ou égale à 0,02 partie en poids pour 100 parties de l'ensemble polyoléfine (A) et polymère (B). On obtient de bons résultats lorsque cette quantité est supérieure ou égale à 0,1 partie en poids. Cette quantité est généralement inférieure ou égale à 60 parties en poids, de préférence inférieure ou égale à 30 parties en poids pour 100 parties de l'ensemble polyoléfine (A) et polymère (B). On obtient de particulièrement bons résultats lorsque la quantité de composé fonctionnel (D) est inférieure ou égale à 15 parties en poids et plus particulièrement inférieure ou égale à 10 parties en poids.

Lorsque l'on met en oeuvre à titre de composés fonctionnels (D) un composé électrodonneur et un composé électroaccepteur la quantité respective de ces composés n'est pas critique pour autant que la quantité totale de composé fonctionnel mise en oeuvre soit respectée. Il peut néanmoins être souhaitable de mettre en oeuvre ces deux composés fonctionnels (D) dans des rapports molaires proches de l'unité. En général le rapport molaire entre le composé électrodonneur et le composé électro-accepteur varie de 0,5 à 2, de préférence de 0,7 à 1,5 et plus particulièrement de 0,8 à 1,2.

Dans le procédé selon la présente invention, on met en oeuvre des quantités respectives de polyoléfine (A) et de polymère thermoplastique (B) telles que leur rapport en poids est de 0,01 à 100, de préférence de 0,05 à 20 et plus particulièrement de 0,1 à 10. Lorsque l'on met en oeuvre un polymère du propylène à titre de polyoléfine (A) et un polymère de l'éthylène à titre de polymère (B), il peut s'avérer avantageux de les mettre en oeuvre dans des rapports en poids de 1 à 20.

Pour effectuer le mélange on peut utiliser tous les dispositifs connus à cet effet. Ainsi, on peut travailler indifféremment avec des malaxeurs de type externe ou interne. Les malaxeurs de type interne sont les plus appropriés et parmi eux les malaxeurs discontinus de type BRABENDER et les malaxeurs continus tels que les extrudeuses. Le mélange peut être effectué dans les conditions habituelles bien connues de l'homme du métier.

L'ordre d'introduction des constituants dans le malaxeur n'est pas critique. On peut indifféremment les introduire isolément et successivement ou réaliser un prémélange de la polyoléfine (A) avec le polymère thermoplastique (B) ou avec le composé (D), du polymère thermoplastique (B) avec le composé (D) ou encore des polymères (A) et (B) et du composé (D) simultanément.

Dans le procédé de l'invention, on met généralement en oeuvre également un composé susceptible de générer des radicaux libres.

Des exemples de tels composés sont les imides halogénés telles que par exemple le N-bromosuccinimide, les peroxydes organiques tels que le peroxyde de benzoyle et de dicumyle, l'hydroperoxyde de cumène, le 2,5-diméthyl-2,5-ditertiobutylperoxyhexane, les persulfates tels que les persulfates de potassium ou d'ammonium et les composés diazo tels que l'azobisisobutyronitrile etc. De préférence les composés susceptibles de générer des radicaux libres sont choisis de manière à ce qu'ils se décomposent aux températures auxquelles est effectué le mélange en fondu.

Lorsque de tels composés sont utilisés, ils sont mis en oeuvre dans des quantités inférieures ou égales à 1 partie en poids pour 100 parties de l'ensemble de la polyoléfine (A) et du polymère thermoplastique (B), de préférence inférieures ou égales à 0,5 partie et plus particulièrement inférieures ou égales à 0,1 partie en poids pour 100 parties de l'ensemble de la polyoléfine (A) et du polymère thermoplastique (B). Ces composés sont généralement mis en oeuvre dans des quantités supérieures ou égales à 0,0025 partie de préférence supérieures ou égales à 0,005 partie et plus particulièrement supérieures ou égales à 0,01 partie pour 100 parties de l'ensemble de la polyoléfine (A) et du polymère thermoplastique (B).

Le procédé selon la présente invention présente l'avantage d'être particulièrement simple à mettre en oeuvre. Il permet également d'obtenir de manière reproductible et dans des laps de temps particulièrement courts les compositions thermoplastiques décrites ci-avant.

Les exemples suivants servent à illustrer l'invention.

### Exemple 1

Une extrudeuse de type MDK/E46B commercialisée par BUSS est aménagée de manière à ce que le corps principal comprenne les trois zones successives reprises ci-après :
- zone 1 :: zone d'introduction et de malaxage des réactifs
- zone 2 :: zone centrale de réaction
- zone 3 :: zone munie d'un évent permettant le dégazage des réactifs n'ayant pas réagi.

La zone 2 est isolée des zones 1 et 3 par deux bagues de restriction.

Cette extrudeuse est alimentée à un débit de 10 kg/h par un mélange contenant par kilo :
- 678,5 g de polypropylène d'indice de fluidité égal à 1 g/10 min, mesuré selon la norme ISO 1133 à 230°C sous 2,16 kg, et commercialisé sous la dénomination ELTEX® P HF001 P par SOLVAY SA (polyoléfine (A)),
- 291 g de polyéthylène d'indice de fluidité égal à 1,8 g/10 min, mesuré selon la norme ISO 1133 à 190°C sous 2,16 kg, et commercialisé sous la dénomination ELTEX B 4020 P par SOLVAY SA (polymère thermoplastique (B)),
- 30 g d'anhydride maléique
- 0,5 g de 2,5-diméthyl-2,5-ditertiobutyl-peroxyhexane (DHBP).

On introduit dans la zone 2, à l'aide d'une pompe doseuse 38 g de styrène par kg de mélange. L'injecteur est placé à 280 mm de l'alimentation principale de l'extrudeuse.

Les conditions d'extrusion sont :
température de l'huile de chauffage
- vis du co-malaxeur : 160°C
- zones 1 et 2 : 220°C
- zone 3 et vis de granulation : 200°C
vitesses de rotation des vis
- vis du co-malaxeur : 150 tr/min
- vis de granulation : 15 tr/min.

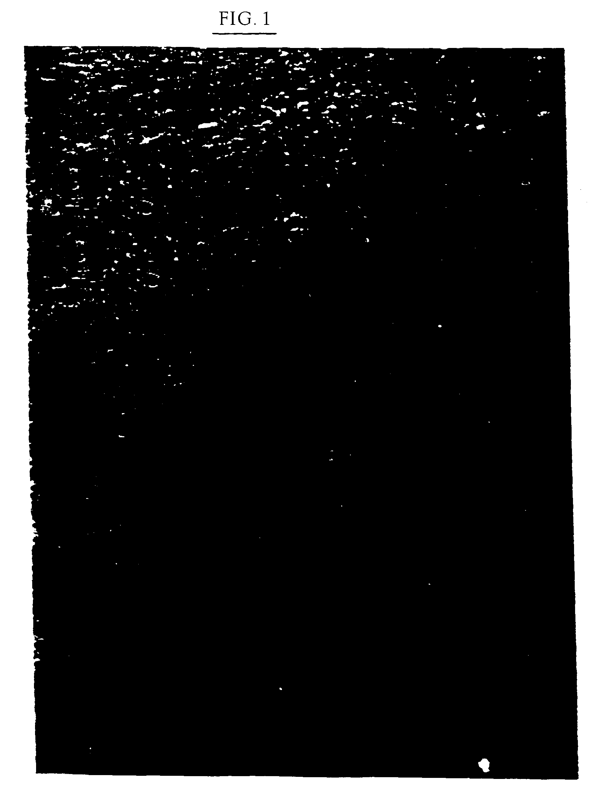

La composition obtenue dont l'indice de fluidité, mesuré à 230°C sous 2,16 kg, est égal à 0,73 g/10 min est analysée par micro-photographie optique en contraste de phase à un grossissement de 750 X (fig. 1). La phase minoritaire (polyéthylène) se présente sous forme de nodules de petite taille (1 à 2 µm) répartis de manière remarquablement homogène. La stabilité morphologique de cette composition est analysée de la manière décrite ci-dessous.

Une coupe micrographique est placée sur une platine chauffante et soumise au programme thermique suivant :
- élévation de la température jusqu'à 200°C à raison de 20°C/min,
- maintien à 200°C pendant 5 min,
- diminution de la température jusqu'à la température ambiante à raison de 3°C/min.

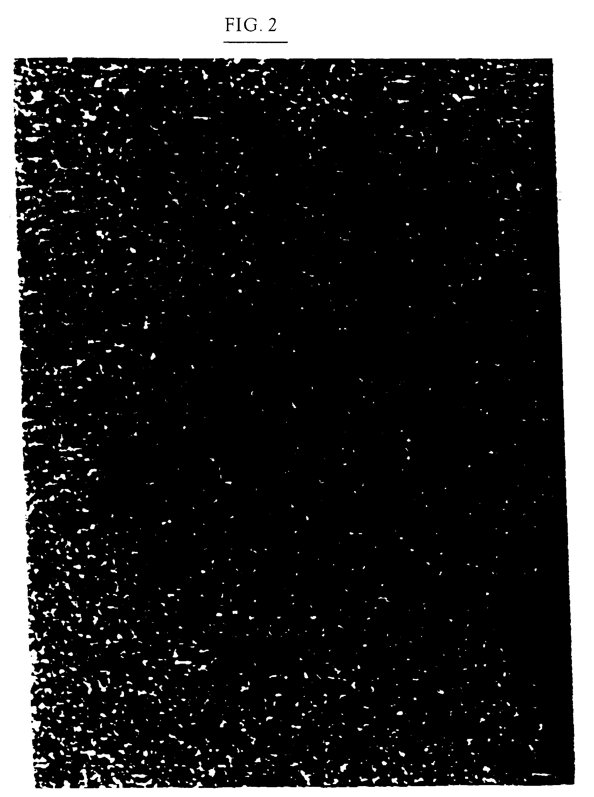

Par micro-photographie optique en contraste de phase (fig. 2), on remarque que la composition issue de ce traitement présente un aspect similaire à la composition issue directement de l'extrudeuse (Taille des nodules identique et répartition homogène de ces derniers).

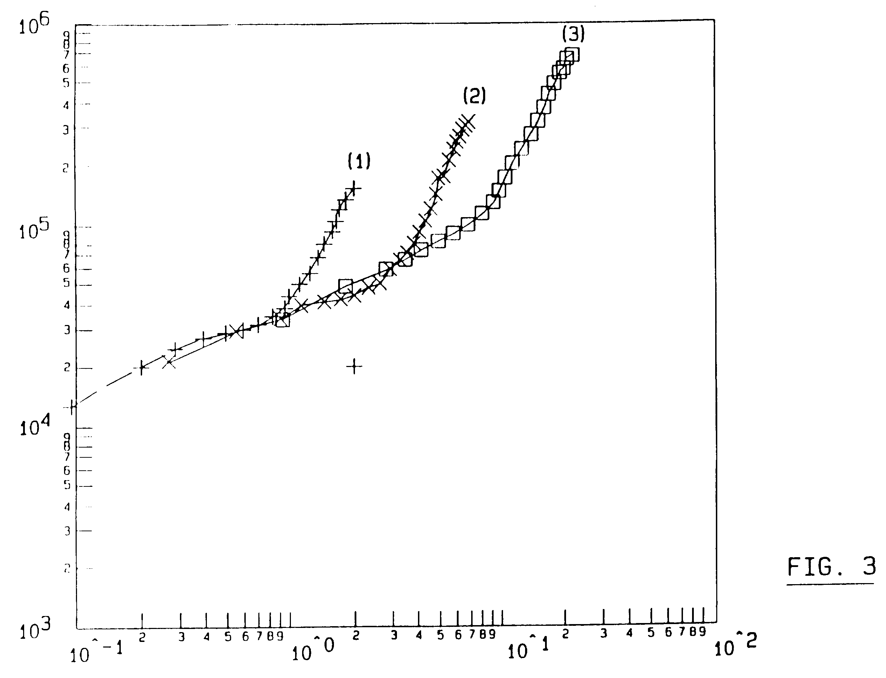

La viscosité élongationnelle de la composition issue de l'extrudeuse est déterminée au moyen d'un rhéomètre commercialisé par RHEOMETRICS sous la dénomination RHEOMETRICS EXTENSIONAL RHEOMETRE RER-9000 (Fig. 3). Les courbes de cette figure, relevées à 190 °C, reprennent la variation de la viscosité élongationnelle à l'état fondu (exprimée en Pa.s) en fonction du temps (exprimé en s) pour des vitesses d'élongation (exprimées en s⁻¹) égales à 1 (courbe (1)), 0,3 (courbe (2)) et 0,1 (courbe (3)). On remarque sur cette figure que lorsque la composition est soumise à l'état fondu à une élongation à gradient de vitesse constant, la viscosité élongationnelle augmente jusqu'à un maximum avant rupture fragile de l'échantillon. Il y a donc durcissement sous tension suivie d'une rupture fragile.

### Exemple 2

On répète l'exemple 1 mais en mettant en oeuvre un mélange contenant par kilo 692,5 g de polypropylène, 297 g de polyéthylène, 0,5 g de DHBP et 10 g d'anhydride maléique. Dans la zone 2, on introduit 12 g de styrène par kg de mélange.

La composition ainsi obtenue présente un indice de fluidité de 3,2 g/10 min à 230 °C sous 2,16 kg et présente une dispersion des phases homogènes, la taille moyenne des nodules de la phase minoritaire étant comprise entre 3 et 4 µm. A nouveau, on n'observe pas de modification significative de cette dispersion lors du traitement thermique décrit à l'exemple 1.

### Exemple 3R

Cet exemple est donné à titre comparatif.

On reproduit l'exemple 1 mais en omettant d'introduire le DHBP, l'anhydride maléique et le styrène. On obtient alors une composition dont l'indice de fluidité est de 2,6 g/10 min. La dispersion des phases est homogène la phase minoritaire se présentant sous forme de nodules de 3 à 4 µm.

Lors du traitement thermique décrit à l'exemple 1 on observe une coalescence de la phase minoritaire. Cette dernière se présente alors sous forme de nodules de dimensions variables pouvant être supérieures à 20 µm, répartis de manière non uniforme.

## Revendications

1. Composition thermoplastique comprenant au moins :
- une polyoléfine (A) choisie parmi les homo- et copolymères semi-cristallins du propylène,
- un polymère thermoplastique (B), choisi parmi les homo- et copolymères semi-cristallins des alpha-oléfines contenant de 2 à 20 atomes de carbone de composition chimique différente de celle de la polyoléfine (A)
- au moins un composé (C) choisi parmi les composés dérivés d'au moins un composé fonctionnel (D) comprenant au moins deux doubles liaisons carbone-carbone conjuguées et les composés dérivés d'au moins deux composés fonctionnels (D) choisis respectivement parmi les composés électrodonneur et électroaccepteur.

2. Composition selon la revendication 1, caractérisée en ce que le polymère thermoplastique (A) est choisi parmi les homo- et copolymères semi-cristallins de l'éthylène.

3. Composition selon la revendication 1 ou 2, caractérisée en ce que le composé (C) est dérivé du divinylbenzène.

4. Composition selon la revendication 1 ou 2, caractérisée en ce que le composé (C) est dérivé du styrène et de l'anhydride maléique.

5. Composition selon la revendication 1 ou 2, caractérisée en ce que le composé (C) est dérivé du divinylbenzène et de l'anhydride maléique.

6. Composition selon l'une quelconque des revendications 1 à 5, caractérisée en ce que la quantité de composé (C) varie de 60 à 0,005 % en poids par rapport au poids total de la composition.

7. Composition selon l'une quelconque des revendications 1 à 6, caractérisée en ce que les quantités respectives de la polyoléfine (A) et du polymère thermoplastique (B) sont telles que leur rapport en poids est de 0,01 à 100.

8. Composition selon la revendication 2, caractérisée en ce que les quantités respectives du polymère du propylène (C) et du polymère d'éthylène (B) sont telles que leur rapport en poids est de 1 à 20.

9. Composition selon l'une quelconque des revendications 1 à 8, caractérisée en ce qu'elle est obtenue par un procédé comprenant le mélange en fondu d'au moins une polyoléfine (A) avec un polymère thermoplastique (B) en présence d'un ou plusieurs composés fonctionnels (D).

10. Utilisation d'une composition selon l'une quelconque des revendications 1 à 9 pour l'obtention d'objets façonnés par diverses méthodes de mise en oeuvre telles que l'extrusion ou l'injection soufflage, le thermoformage ou l'enduction.

11. Utilisation d'une composition selon l'une quelconque des revendications 1 à 9 pour la formation de mousse.

12. Procédé d'obtention d'une composition selon l'une quelconque des revendications 1 à 9, caractérisé en ce qu'il comprend une seule étape de mélange en fondu d'au moins une polyoléfine (A) avec un polymère thermoplastique (B) en présence d'un ou plusieurs composé(s) fonctionnel(s) (D).

13. Procédé selon la revendication 12, caractérisé en ce que on met en oeuvre :
- de 1 à 100 parties en poids de polyoléfine (A),
- de 1 à 100 parties en poids de polymère thermoplastique (B) et
- pour 100 parties de l'ensemble de la polyoléfine (A) et du polymère thermoplastique (B), de 0,05 à 100 parties en poids de composé(s) fonctionnel(s) (D).

## Claims

1. Thermoplastic composition comprising at least :
- a polyolefin (A) chosen from semicrystalline home and copolymers of propylene,
- a thermoplastic polymer (B) chosen from semicrystalline homo- and copolymers of alpha-olefins containing from 2 to 20 carbon atoms of chemical composition other than that of the polyolefin (A), and
- at least one compound (C) chosen from compounds derived from at least one functional compound (D) containing at least two conjugated carbon-carbon double bonds and from compounds derived from at least two funtional compounds (D) chosen respectively from electron-donor and electron-acceptor compounds.

2. Composition according to Claim 1, characterized in that the thermoplastic polymer (B) is chosen from semicrystalline homo- and copolymers of ethylene.

3. Composition according to Claim 1 or 2, characterized in that the compound (C) is derived from divinylbenzene.

4. Composition according to Claim 1 or 2, characterized in that the compound (C) is derived from styrene and maleic anhydride.

5. Composition according to Claim 1 or 2, characterized in that the compound (C) is derived from divinylbenzene and maleic anhydride.

6. Composition according to any one of Claims 1 to 5, characterized in that the quantity of compound (C) varies from 60 to 0.005 % by weight relative to the total weight of the composition.

7. Composition according to any one of Claims 1 to 6, characterized in that the respective quantities of the polyolefin (A) and of the thermoplastic polymer (B) are such that their weight ratio is from 0.01 to 100.

8. Composition according to Claim 2, characterized in that the respective quantities of the propylene polymer (A) and of the ethylene polymer (B) are such that their weight ratio is from 1 to 20.

9. Composition according to any one of Claims 1 to 8, characterized in that it is obtained by a process comprising the melt blending of at least one polyolefin (A) with a thermoplastic polymer (B) in the presence of one or a number of functional compounds (D).

10. Use of a composition according to any one of Claims 1 to 9 for obtaining objects manufactured by various processing methods, such as extrusion or blow moulding, thermoforming or coating.

11. Use of a composition according to any one of Claims 1 to 9 for forming foam.

12. Process for obtaining a composition according to any one of Claims 1 to 9, characterized in that it comprises a single stage of melt blending of at least one polyolefin (A) with a thermoplastic polymer (B) in the presence of one or a number of functional compound(s) (D).

13. Process according to Claim 12, characterized in that the following are used :
- from 1 to 100 parts by weight of polyolefin (A),
- from 1 to 100 parts by weight of thermoplastic polymer (B), and
- from 0.05 to 100 parts by weight of functional compound(s) (D) per 100 parts of the total of the polyolefin (A) and of the thermoplastic polymer (B).

## Patentansprüche

1. Thermoplastische Zusammensetzung, die wenigstens umfaßt:
- ein Polyolefin (A), das unter den teilkristallinen Homo- und Copolymeren des Propylens ausgewählt ist,
- ein thermoplastisches Polymer (B), das unter den teilkristallinen Homo- und Copolymeren der 2 bis 20 Kohlenstoffatome enthaltenden alpha-Olefine ausgewählt ist, dessen chemische Zusammensetzung von der des Polyolefins (A) verschieden ist,
- wenigstens eine Verbindung (C), die unter den Verbindungen, die von wenigstens einer funktionellen Verbindung (D), die wenigstens zwei konjugierte Kohlenstoff-Kohlenstoff-Doppelbindungen umfaßt, abgeleitet sind, und den Verbindungen ausgewählt ist, die von wenigstens zwei funktionellen Verbindungen (D), die unter den Elektronendonor- beziehungsweise Elektronenakzeptorverbindungen ausgewählt sind, abgeleitet sind.

2. Zusammensetzung gemäß Anspruch 1, dadurch gekennzeichnet, daß das thermoplastische Polymer (B) unter den teilkristallinen Homo- und Copolymeren des Ethylens ausgewählt ist.

3. Zusammensetzung gemäß Anspruch 1 oder 2, dadurch gekennzeichnet, daß die Verbindung (C) von Divinylbenzol abgeleitet ist.

4. Zusammensetzung gemäß Anspruch 1 oder 2, dadurch gekennzeichnet, daß die Verbindung (C) von Styrol und Maleinsäureanhydrid abgeleitet ist.

5. Zusammensetzung gemäß Anspruch 1 oder 2, dadurch gekennzeichnet, daß die Verbindung (C) von Divinylbenzol und Maleinsäureanhydrid abgeleitet ist.

6. Zusammensetzung gemäß einem der Ansprüche 1 bis 5, dadurch gekennzeichnet, daß die Menge an Verbindung (C), bezogen auf das Gesamtgewicht der Zusammensetzung, von 60 bis 0,005 Gew.-% variiert.

7. Zusammensetzung gemäß einem der Ansprüche 1 bis 6, dadurch gekennzeichnet, daß die jeweiligen Mengen des Polyolefins (A) und des thermoplastischen Polymers (B) so sind, daß ihr Gewichtsverhältnis 0,01 bis 100 beträgt.

8. Zusammensetzung gemäß Anspruch 2, dadurch gekennzeichnet, daß die jeweiligen Mengen des Propylenpolymers (A) des Ethylenpolymers (B) so sind, daß ihr Gewichtsverhältnis 1 bis 20 beträgt.

9. Zusammensetzung gemäß einem der Ansprüche 1 bis 8, dadurch gekennzeichnet, daß sie durch ein Verfahren erhalten wird, das das Mischen in der Schmelze wenigstens eines Polyolefins (A) mit einem thermoplastischen Polymer (B) in Gegenwart eines oder mehrerer funktioneller Verbindungen (D) umfaßt.

10. Verwendung einer Zusammensetzung gemäß einem der Ansprüche 1 bis 9 zur Herstellung von Gegenständen, die durch verschiedene Verarbeitungsverfahren, wie die Extrusion oder das Spritzblasen, das Warmformen oder das Beschichten geformt werden.

11. Verwendung einer Zusammensetzung gemäß einem der Ansprüche 1 bis 9 für die Bildung von Schaumstoff.

12. Verfahren zur Herstellung einer Zusammensetzung gemäß einem der Ansprüche 1 bis 9, dadurch gekennzeichnet, daß es einen einzigen Schritt des Mischens in der Schmelze wenigstens eines Polyolefins (A) mit einem thermoplastischen Polymer (B) in Gegenwart einer oder mehrerer funktionellen(r) Verbindung(en) (D) umfaßt.

13. Verfahren gemäß Anspruch 12, dadurch gekennzeichnet, daß man:
- 1 bis 100 Gewichtsteile Polyolefin (A);
- 1 bis 100 Gewichtsteile thermoplastisches Polymer (B) und
- auf 100 Teile der Summe des Polyolefins (A) und des thermoplastischen Polymers (B) 0,05 bis 100 Gewichtsteile funktionelle Verbindung(en) (D) einsetzt.
